# EUROPEAN PATENT APPLICATION

(11) **EP 4 539 546 A1**
(43) Date of publication of application: **16.04.2025**
(21) Application number: 23819516.8
(22) Date of filing: 24.04.2023
(51) Int. Cl.: H04W 36/32, G05D 1/02, H04W 4/44, H04W 36/14, H04W 48/16

(54) **TRAVELING VEHICLE SYSTEM**

(30) Priority: 07.06.2022 JP 2022092437
(71) Applicant: Murata Machinery, Ltd., Kyoto-shi, Kyoto 601-8326 (JP)
(72) Inventor: YAMASHITA, Taiji, Inuyama-shi, Aichi 484-8502 (JP)
(74) Representative: Stöckeler, Ferdinand
(86) International application number: PCT/JP2023/016105
(87) International publication number: WO 2023/238529

(57) **Abstract**

[Problem] To select a communication method without involving an additional new command for a communication method selection (designation).

[Means to Solve Problem] A first communicator 340 includes a first memory storage 343 that stores, in association with each other, a communication method that can be used between communicators and a communication channel corresponding to the communication method, and a traveling vehicle 300 includes a second memory storage 320 that stores, in association with each other, area identification information for identifying each area 30 and the communication channel. The traveling vehicle 300 specifies the communication channel to be used in an area 30 including its current location, using information stored in the second memory storage 320. The first communicator 340 specifies the communication method corresponding to the communication channel specified by the traveling vehicle 300, using information stored in the first memory storage 343, and communicates with a second communicator 200, using the communication channel and the communication method that have been specified.

## Description

### Technical Field

The present invention relates to a traveling vehicle system.

### Background Art

Conventionally, a traveling vehicle system is known which includes a plurality of traveling vehicles traveling in partitioned areas and a controller that transmits traveling instructions and other instructions to each vehicle within each area. Patent Literature 1 discloses a technique for storing channel information indicating, for each block, a wireless channel available for use, and for switching the wireless channel depending on the block corresponding to the current location in which the traveling vehicle is traveling.

### Citation List

### Patent Literature

[Patent Literature 1] Japanese Patent No. 6895657

### Summary of Invention

### Technical Problem

In the conventional technique, channel information indicating an available wireless channel for each block is preliminarily prepared, and the wireless channel is switched depending on the current location of the traveling vehicle. Regarding such conventional technique, for example, it is assumed that an already installed communicator is replaced with another communicator that uses a different communication method. In such a case, during the replacement work of the communicator, the traveling vehicle selects a communication method that corresponds to the communicator to communicate with. However, a new command must be added to select the communication method that corresponds to the communicator. The conventional technique does not disclose a method for selecting (designating) the communication method.

The present invention thus provides a traveling vehicle system and a traveling vehicle capable of selecting a communication method without involving an additional new command for selecting (designating) a communication method.

### Means for Solving Problem

A traveling vehicle system according to an aspect of the present invention comprises: a traveling vehicle including a first communicator; and a controller that communicates with the first communicator via a second communicator installed in each area in which the traveling vehicle travels and that controls traveling of the traveling vehicle, wherein the first communicator includes a first memory storage that stores, in association with each other, a communication method that can be used between communicators and a communication channel corresponding to the communication method, wherein the traveling vehicle includes a second memory storage that stores, in association with each other, area identification information for identifying each area and the communication channel, wherein the traveling vehicle specifies the communication channel to be used in an area including its current location, using information stored in the second memory storage, and wherein the first communicator specifies the communication method corresponding to the communication channel specified by the traveling vehicle, using information stored in the first memory storage, and communicates with the second communicator, using the communication channel and the communication method that have been specified.

### Advantageous Effects of the Invention

According to the traveling vehicle system of an aspect of the present invention, the traveling vehicle implements communication between communicators that use a communication method corresponding to a communication channel, using information stored in the memory storage. It is thus possible to select a communication method without involving an additional new command for a communication method selection (designation).

In the traveling vehicle system of the above aspect, the traveling vehicle may acquire update information including the area identification information, the communication channel, and the communication method from the controller upon replacement of the second communicator, and update information stored in the first memory storage and the second memory storage. According to such an aspect, the information including a new communication channel is accepted from the controller and the communication channel information is updated. It is thus possible to implement rapid information update in response to replacement of the second communicator when applying a different communication method to a certain area. In the traveling vehicle system of the above aspect, the first communicator may communicate with the second communicator using the communication method including a modulation method. According to such an aspect, it is possible to implement communication between communicators using communication methods corresponding to various modulation methods. In the traveling vehicle system of the above aspect, the second memory storage may store map information pertaining to a layout of the traveling vehicle system, the map information including the area identification information and the communication channel, and the traveling vehicle may travel through each area on the basis of the map information. According to such an aspect, it is possible to implement communication channel switching without changing the specifications of an existing system in which information such as communication channels is stored in map information.

### Brief Description of the Drawings

Fig. 1 is a diagram showing a configuration example of a traveling vehicle system according to an embodiment.
Fig. 2 is a diagram showing an example of a layout of the traveling vehicle system according to the embodiment.
Fig. 3 is a diagram showing an example of information stored in a controller according to the embodiment.
Fig. 4 is a diagram showing an example of information stored in a second communicator according to the embodiment.
Fig. 5 is a flowchart showing an example of the flow of processing performed by a controller upon replacement of the second communicator according to the embodiment.
Fig. 6 is a flowchart showing an example of the flow of processing performed in a traveling vehicle upon replacement of the second communicator according to the embodiment.
Fig. 7 is a flowchart showing an example of the flow of communication channel specification processing performed by the traveling vehicle according to the embodiment.
Fig. 8 is a flowchart showing an example of the flow of communication method specification processing performed by a first communicator according to the embodiment.

### Description of Embodiments

Hereunder, an embodiment will be described, with reference to the drawings. However, the present invention should not be considered as limited to the embodiment described below. In the drawings, scale may be changed as necessary to illustrate the embodiment, such as by enlarging, reducing or emphasizing a portion.

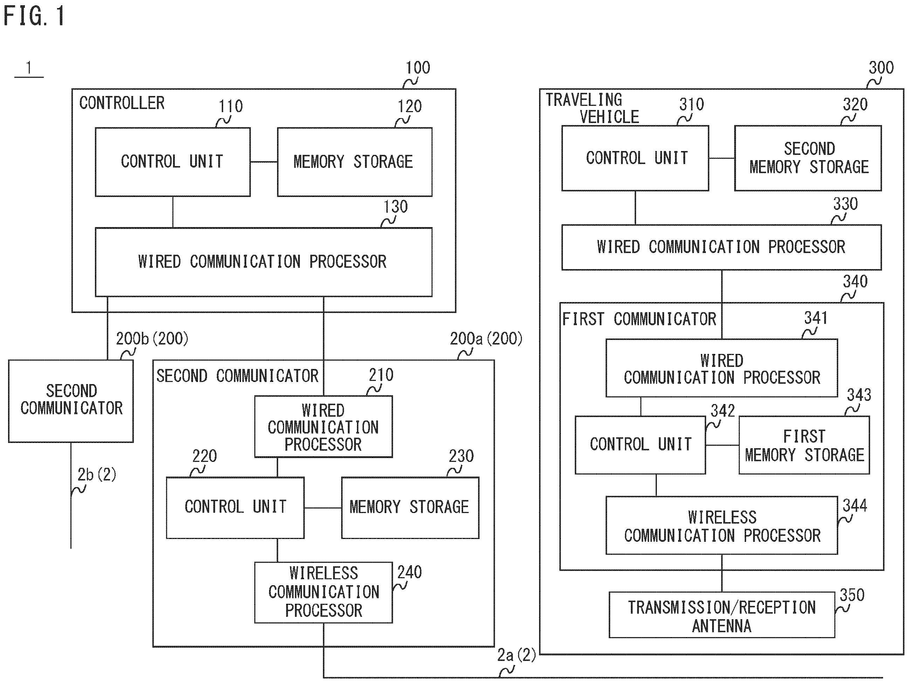

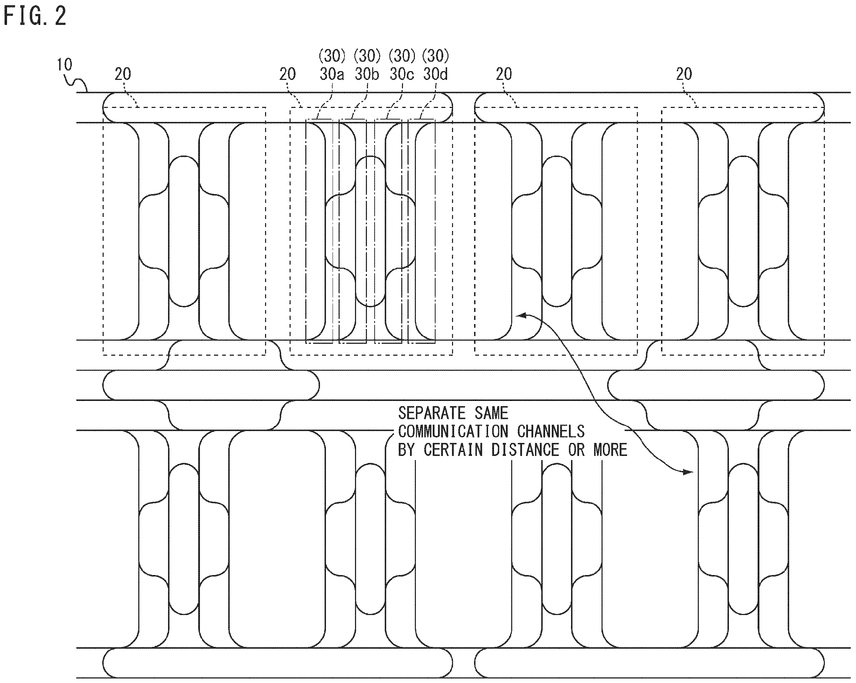

Fig. 1 is a diagram showing a configuration example of a traveling vehicle system according to the embodiment. Fig. 2 is a diagram showing an example of a layout of the traveling vehicle system according to the embodiment. The traveling vehicle system 1 includes a controller 100, a second communicator 200, and a traveling vehicle 300. For example, the traveling vehicle system 1 is a system installed in a semiconductor device manufacturing factory. On the basis of traveling instructions from the controller 100, the traveling vehicle 300 transports containers such as FOUPs (Front-Opening Unified Pod) accommodating semiconductor wafers used for manufacturing semiconductor devices, or reticle pods accommodating processing members such as reticles. A plurality of controllers 100, a plurality of second communicators 200, and a plurality of traveling vehicles 300 may be provided in the traveling vehicle system 1.

The traveling vehicle 300 travels along a track 10. The traveling vehicle 300 is, for example, an overhead traveling vehicle. The track 10 is a traveling region, and is, for example, a traveling rail provided on a ceiling of a clean room or the like. The track R is provided adjacent to a processing apparatus not shown in the drawings, a stocker (automated warehouse) not shown in the drawings, or the like. The processing apparatus is, for example, an exposure apparatus, a coater/developer, a film forming apparatus, or an etching apparatus, and performs various processes on a semiconductor wafer in the container transported by the traveling vehicle 300. The stocker stores, for example, containers transported by the traveling vehicle 300. The traveling vehicle 300 may be a track-guided vehicle or a trackless vehicle. In those cases where the traveling vehicle 300 is a track-guided vehicle that travels on the ground, the track 10 is provided on a floor or the like.

The track 10 is provided with a power supply line not shown in the drawings. The power supply line is arranged along the track 10. For example, an alternating current is supplied to the power supply line. The traveling vehicle 300 includes a power receiving coil and receives power in a non-contact manner through electromagnetic induction from the power supply line. When power is supplied non-contactly, the generation of dust and other contaminants due to contact can be suppressed, making it suitable for use in a clean room. In the layout shown in Fig. 2, the track 10 is configured such that an island 20 is partitioned into one or more areas 30 (for example, areas 30a, 30b, 30c, 30d, and so on). For example, each island 20 is a unit managed by one controller 100, and a second communicator 200 is provided in each area 30. In other words, depending on the number of areas included in an island 20, one or more second communicators 200 (for example, second communicators 200a, 200b, and so on) are connected to the controller 100. Feeder cables 2 (2a, 2b) for wireless communication with the traveling vehicle 300 are connected to the second communicators (200a, 200b). The layout shown in the figure is merely an example and can be configured in any desired layout. In the following description, when no particular distinction is made between the areas 30a, 30b, 30c, and 30d, they will simply be referred to as "area 30". When no particular distinction is made between the second communicators 200a and 200b, they will simply be referred to as "second communicator 200". As shown in Fig. 2, in those cases where the same communication channel is used in different areas 30, it is preferable that the areas 30 be separated by a predetermined distance or more in order to suppress interference.

The controller 100 communicates with the first communicator 340 via the second communicator 200 serving as a modem installed in each area 30 (for example, area 30a, area 30b, area 30c, or area 30d) including the track 10 on which the traveling vehicle 300 travels, and transmits traveling instructions to the traveling vehicle 300. The traveling vehicle 300 includes the first communicator 340 serving as a modem, and travels through each area 30 on the basis of transport instructions received from the controller 100 via the first communicator 340 and the second communicator 200. The traveling vehicle 300 transmits its own state information to the controller 100 in response to a request from the controller 100. For example, the state information includes information related to the current location, destination, driving state, and state of the transported article, along with traveling vehicle identification information identifying the traveling vehicle 300. The traveling state is information indicating the current speed of the traveling vehicle 300. The state of the transported article is information indicating the presence/absence and type of the article being transported.

In the configuration mentioned above, the controller 100 includes a control unit 110, a memory storage 120, and a wired communication processor 130. The control unit 110 comprehensively controls the controller 100 and executes various processes in the controller 100. For example, the control unit 110 generates a traveling instruction on the basis of the state information received from the traveling vehicle 300. The control unit 110 then transmits the generated traveling instruction to the traveling vehicle 300 via the second communicator 200. The communication between the controller 100 and the traveling vehicle 300 is implemented by a communication method corresponding to the current location of the traveling vehicle 300 to communicate with.

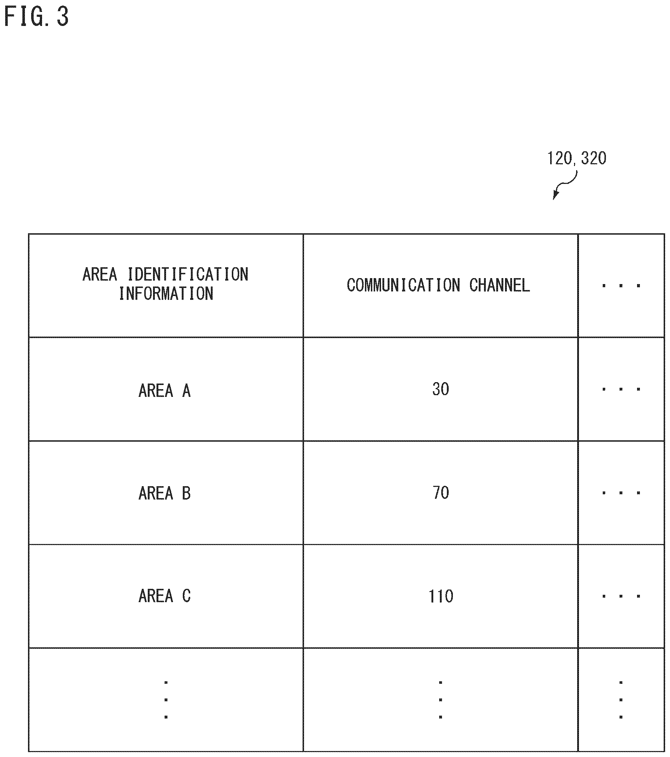

The memory storage 120 is, for example, a non-volatile memory, and stores state information received from the traveling vehicles 300 (each traveling vehicle 300) and map information related to the layout of the traveling vehicle system 1. The memory storage 120 also stores, in association with each other, area identification information for identifying each area 30 in the layout of the traveling vehicle system 1 and a communication channel corresponding to the communication method. Fig. 3 is a diagram showing an example of information stored in the controller according to the embodiment. As shown in Fig. 3, the memory storage 120 stores, in association with each other, area identification information and communication channels. For example, the memory storage 120 stores, in association with each other, area identification information "area A" and a communication channel "30". The information shown in Fig. 3 may be included in the map information. The control unit 110 uses the information stored in the memory storage 120 to specify the area identification information of the area 30 in which a traveling vehicle 300 is located from the current location of the traveling vehicle 300, and specifies the communication channel corresponding to the communication method that can be used with the traveling vehicle 300. Then, the control unit 110 notifies the second communicator 200 of the specified communication channel via the wired communication processor 130.

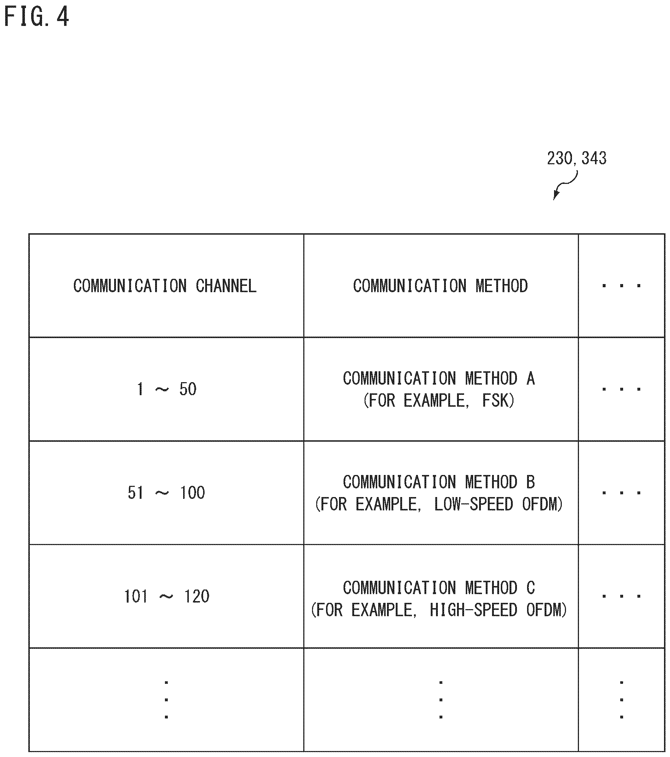

The second communicator 200 has a wired communication processor 210, a control unit 220, a memory storage 230, and a wireless communication processor 240, and facilitates the exchange of various information between the controller 100 and the traveling vehicle 300. The memory storage 230 stores, in association with each other, communication methods that can be used between the communicators (for example, between the first communicator 340 and the second communicator 200 described later) and communication channels corresponding to the communication methods. Fig. 4 is a diagram showing an example of information stored in the second communicator according to the embodiment. As shown in Fig. 4, the memory storage 230 stores, in association with each other, communication channels "1 to 50" and a communication method A (for example, FSK: Frequency Shift Keying). In addition, in Fig. 4, communication channels for a communication method B (for example, low-speed OFDM: Orthogonal Frequency Division Multiplexing) are designated as "51 to 100," and communication channels for a communication method C (for example, high-speed OFDM) are designated as "101 to 120". Thus, the communication methods include the modulation methods. The memory storage 230 stores the communication method and communication channel that can be used by the second communicator 200 itself. Therefore, the memory storage 230 may not always store all of the communication methods and communication channels shown in Fig. 4. These communication methods and communication channels are merely examples, and any communication method and communication channel can be set. For example, the communication method may be optical wireless communication or wireless communication such as Wi-Fi.

The control unit 220 comprehensively controls the second communicator 200 and executes various processes in the second communicator 200. For example, the control unit 220 receives a transport instruction and a communication channel from the controller 100 via the wired communication processor 210. The control unit 220 then specifies the communication method that corresponds to the communication channel, using the information stored in the memory storage 230. Thereafter, the control unit 220 transmits a transport instruction and so forth to the traveling vehicle 300 via the wireless communication processor 240, using the specified communication method. The wireless communication processor 240 performs modulation processing (such as wireless conversion) on data to be transmitted to the traveling vehicle 300 in accordance with the communication method.

Here, in the traveling vehicle system 1, the second communicator 200 may be replaced in some cases in order to improve the performance of the system. Accordingly, the replacement second communicator 200 may use a communication method different from the communication method that can be used by the previous second communicator 200. For example, in the traveling vehicle system 1, the modem capable of only using the communication method A shown in Fig. 4 may be replaced with a modem capable of using the communication methods B and C in addition to the communication method A. Upon replacing the second communicator 200, the controller 100 updates the information stored in the memory storage 120 regarding the area identification information and communication channel, and the information stored in the memory storage 230 regarding the communication channel and communication method. Then, the controller 100 transmits update information including the area identification information, the communication channel, and the communication method to the traveling vehicle 300 (each traveling vehicle 300).

The traveling vehicle 300 has a control unit 310, a second memory storage 320, a wired communication processor 330, a first communicator 340, and a transmission/reception antenna 350. The first communicator 340 has a wired communication processor 341, a control unit 342, a memory storage 343, and a wireless communication processor 344, and facilitates the exchange of various information between the traveling vehicle 300 and the controller 100. As with the memory storage 230, the first memory storage 343 stores, in association with each other, communication methods and communication channels (see Fig. 4). The second memory storage 320 is, for example, a non-volatile memory, and stores various information received from the controller 100 and, as with the memory storage 120, map information related to the layout of the traveling vehicle system 1. As with the memory storage 120, the second memory storage 320 stores, in association with each other, area identification information and communication channels (see Fig. 3). As with the second communicator 200, the first communicator 340 communicates with the second communicator 200, using a communication method including a modulation method.

The control unit 310 comprehensively controls the traveling vehicle 300 and executes various processes in the traveling vehicle 300. For example, the control unit 310 causes the traveling vehicle 300 to travel through each area 30 on the basis of the map information stored in the second memory storage 320. The controller 300 acquires update information including area identification information, a communication channel, and a communication method from the controller 100 upon replacement of the second communicator 200, and updates the information stored in the first memory storage 343 and the second memory storage 320. As described above, in the traveling vehicle system 1, the second communicator 200 may be replaced in some cases. As with the second communicator 200, in the traveling vehicle system 1, the first communicator 340 is replaced. The timing of replacing the first communicator 340 may be any timing, however, the present embodiment describes a case as an example, where (all of) the first communicators 340 are replaced before the second communicator 200 is replaced. The first communicators 340 may be replaced as needed without stopping all of the traveling vehicles 300 at the same time.

In order to communicate with the controller 100, the control unit 310 uses the information stored in the second memory storage 320 to specify the communication channel to be used in the area including its current location, and notifies the first communicator 340 via the wired communication processor 330. The control unit 342 comprehensively controls the first communicator 340 and executes various processes in the first communicator 340. For example, the control unit 342 uses the information stored in the first memory storage 343 to specify the communication method that corresponds to the communication channel specified by the control unit 310 of the traveling vehicle 300, and communicates with the second communicator 200 via the communication channel and communication method specified. The control unit 342 acquires the communication channel specified by the control unit 310 via the wired communication processor 341. The wireless communication processor 344 performs modulation processing (such as wireless conversion) on data to be transmitted to the controller 100 in accordance with the communication method. The transmission/reception antenna 350 is connected to the feeder cable 2 and transmits modulated data to the controller 100.

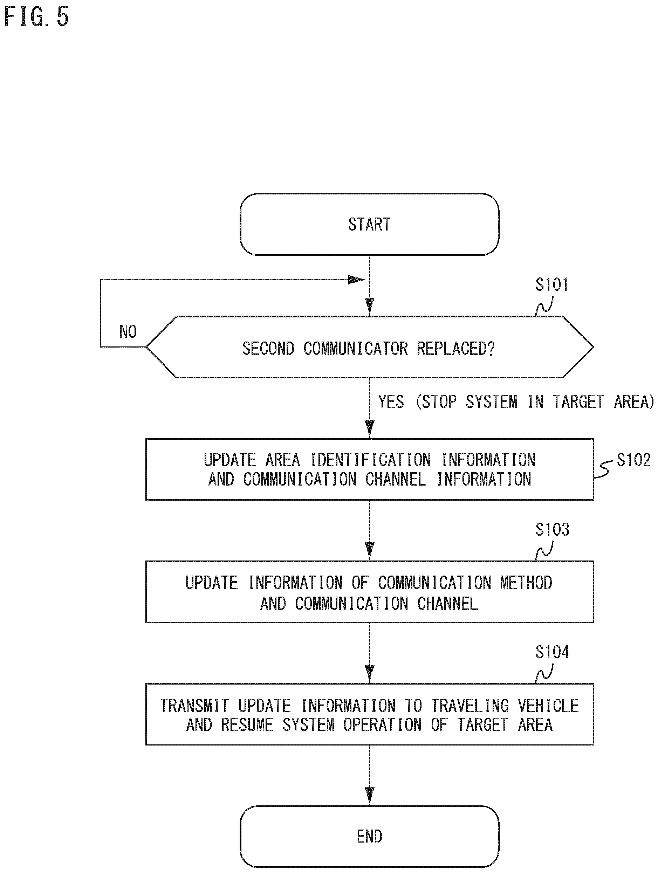

Fig. 5 is a flowchart showing an example of the flow of processing performed by the controller upon replacement of the second communicator according to the embodiment. As shown in Fig. 5, if the second communicator 200 has been replaced (Step S101: YES), the controller 100 updates the area identification information and the communication channel information stored in the memory storage 120 (Step S102). The controller 100 also updates the communication method information and the communication channel information stored in the memory storage 230 (Step S103). On the other hand, if the second communicator 200 has not been replaced (Step S101: NO), the controller 100 is brought into a state of waiting for replacement of the second communicator 200 to occur. It should be noted that the processes of Step S102 and Step S103 may be executed in either order.

Specifically, the controller 100, upon replacement of the second communicator 200, stops the system of the target area 30 (the area 30 that includes the second communicator 200 to be replaced), and then updates the information on the communication channel (stored in the memory storage 120) corresponding to the communication method that will be available for use in the area 30 where the system has been stopped. In addition, the controller 100 instructs the second communicator 200 to also update the communication method information and the communication channel information stored in the memory storage 230.

Then, the controller 100 transmits update information to the traveling vehicle 300 and restarts the system in the target area 30 (Step S104). Specifically, the controller 100 transmits the update information including the area identification information, communication channel information, and communication method information to the traveling vehicle 300 via the second communicator 200. The controller 100 then resumes the system for the target area 30 where the system has been stopped. As described above, replacement of the second communicator 200 is performed on an area-30-by-area-30 (island-20-by-island-20) basis without stopping the entire traveling vehicle system 1.

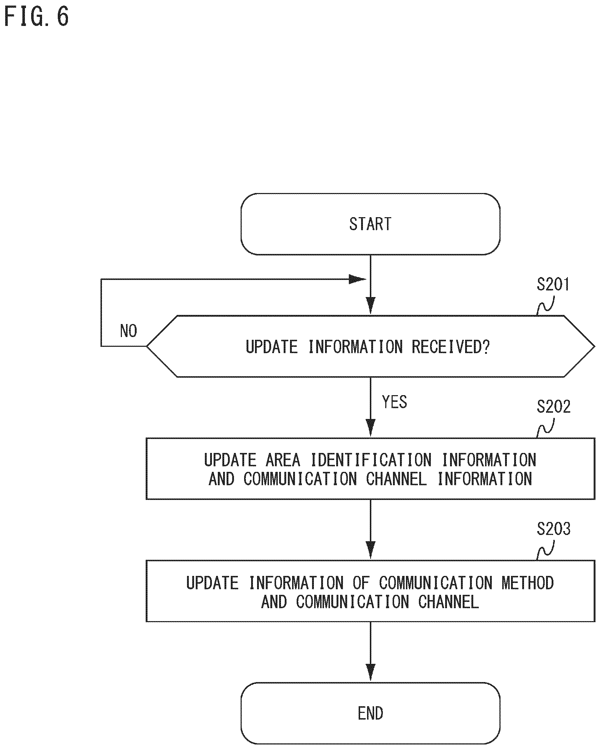

Fig. 6 is a flowchart showing an example of the flow of processing performed in the traveling vehicle upon replacement of the second communicator according to the embodiment. As shown in Fig. 6, if update information has been received (Step S201: YES), the traveling vehicle 300 updates the area identification information and the communication channel information stored in the second memory storage 320 (Step S202). The traveling vehicle 300 also updates the communication method information and the communication channel information stored in the first memory storage 343 (Step S203). On the other hand, if updated information has not been received (Step S201: NO), the traveling vehicle 300 is brought into a state of waiting to receive updated information. It should be noted that the processes of Step S202 and Step S203 may be executed in either order.

Specifically, the traveling vehicle 300 receives update information including the area identification information, communication channel, and communication method from the controller 100 via the first communicator 340, and updates the communication channel corresponding to the area identification information stored in the second memory storage 320. In addition, the traveling vehicle 300 instructs the first communicator 340 to also update the communication method information and the communication channel information stored in the first memory storage 343. This enables the traveling vehicle 300 to readily make a communication method selection for communicating with the replacement second communicator 200 without involving an additional new command for selecting (designating) the communication method.

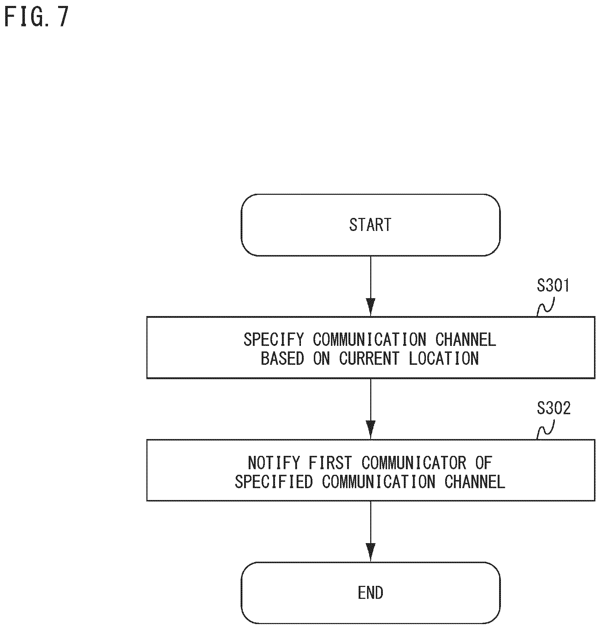

Fig. 7 is a flowchart showing an example of the flow of communication channel specification processing performed by the traveling vehicle according to the embodiment. As shown in Fig. 7, the traveling vehicle 300 specifies the communication channel on the basis of the current location (Step S301). Then, the traveling vehicle 300 notifies the first communicator 340 of the specified communication channel (Step S302). Specifically, the traveling vehicle 300 specifies the communication channel that corresponds to the area identification information of the area 30 including its current location, using the information stored in the second memory storage 320. The traveling vehicle 300 then notifies the first communicator 340 of the specified communication channel in order to communicate with the controller 100 (the second communicator 200) using the communication method that corresponds to the specified communication channel.

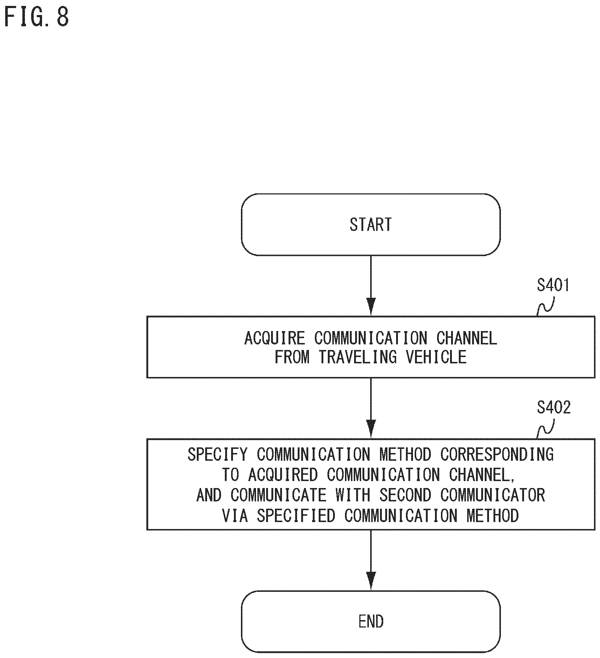

Fig. 8 is a flowchart showing an example of the flow of communication method specification processing performed by the first communicator according to the embodiment. As shown in Fig. 8, the first communicator 340 acquires a communication channel from the traveling vehicle 300 (the control unit 310 of the traveling vehicle 300) (Step S401). Then, the first communicator 340 specifies the communication method that corresponds to the acquired communication channel, and communicates with the second communicator 200 using the specified communication method (Step S402). Specifically, when communicating with the second communicator 200, the first communicator 340 acquires a communication channel from the control unit 310. Then, the first communicator 340 uses the information stored in the first memory storage 343 to specify the communication method that corresponds to the acquired communication channel, and, upon performing the modulation processing in accordance with the specified communication method, the first communicator 340 communicates with the second communicator 200.

As have been described above, according to the traveling vehicle system 1 of the embodiment, the information stored in the second memory storage 320 and the information stored in the first memory storage 343 are used to implement communication between the communicators, using the communication method that corresponds to the communication channel. It is thus possible to select a communication method without involving an additional new command for a communication method selection (designation). According to the traveling vehicle system 1, upon replacement of the second communicator 200, the traveling vehicle 300 receives update information including area identification information, a communication channel, and a communication method from the controller 100, and updates the communication channel information. It is thus possible to implement rapid information update in response to replacement of the second communicator 200 when applying a different communication method to a certain area 30. According to the traveling vehicle system 1, the first communicator 340 communicates with the second communicator 200, using the communication method including a modulation method. It is thus possible to implement communication between communicators, using communication methods corresponding to various modulation methods. According to the traveling vehicle system 1, the second memory storage 320 stores map information including the area identification information and the communication channel. It is thus possible to implement communication channel switching without changing the specifications of an existing system in which information such as communication channels are stored in the map information.

The embodiment of the present invention has been described above. However, the technical scope of the invention is not limited to the description of the above embodiment. It is apparent to those skilled in the art that various modifications or improvements can be added to the above embodiment. The technical scope of the present invention also encompasses one or more of such modifications or improvements. One or more of the requirements described in the above embodiment may be omitted in some cases. Furthermore, one or more of the requirements described in the above embodiment may be combined where appropriate. The contents of all documents cited in the detailed description of the present invention are incorporated herein by reference to the extent permitted by law.

It should be noted that the technical scope of the present invention is not limited to the mode described in the above embodiment. One or more of the requirements described in the above embodiment may be omitted in some cases. One or more of the requirements described in the above embodiment may be combined where appropriate. The contents of Japanese Patent Application No. 2022-092437 and all documents cited in the detailed description of the present invention are incorporated herein by reference to the extent permitted by law.

### Description of Reference Signs

- 1:: Traveling vehicle system
- 100:: Controller
- 200:: Second communicator
- 300:: Traveling vehicle
- 310:: Control unit
- 320:: Second memory storage
- 330:: Wired communication processor
- 340:: First communicator
- 341:: Wired communication processor
- 342:: Control unit
- 343:: First memory storage
- 344:: Wireless communication processor
- 350:: Transmission/reception antenna

## Claims

1. A traveling vehicle system comprising:
a traveling vehicle including a first communicator; and
a controller that communicates with the first communicator via a second communicator installed in each area in which the traveling vehicle travels and that controls traveling of the traveling vehicle,
wherein the first communicator includes a first memory storage that stores, in association with each other, a communication method that can be used between communicators and a communication channel corresponding to the communication method,
wherein the traveling vehicle includes a second memory storage that stores, in association with each other, area identification information for identifying each area and the communication channel,
wherein the traveling vehicle specifies the communication channel to be used in an area including its current location, using the information stored in the second memory storage, and
wherein the first communicator specifies the communication method corresponding to the communication channel specified by the traveling vehicle, using information stored in the first memory storage, and communicates with the second communicator, using the communication channel and the communication method that have been specified.

2. The traveling vehicle system according to claim **1,**
wherein the traveling vehicle acquires update information including the area identification information, the communication channel, and the communication method from the controller upon replacement of the second communicator, and updates information stored in the first memory storage and the second memory storage.

3. The traveling vehicle system according to claim 1 or 2,
wherein the first communicator communicates with the second communicator using the communication method including a modulation method.

4. The traveling vehicle system according to claim 1 or 2,
wherein the second memory storage stores map information pertaining to a layout of the traveling vehicle system, the map information including the area identification information and the communication channel, and
wherein the traveling vehicle travels through each area on the basis of the map information.

5. The traveling vehicle system according to claim 3,
wherein the second memory storage stores map information pertaining to a layout of the traveling vehicle system, the map information including the area identification information and the communication channel, and
wherein the traveling vehicle travels through each area on the basis of the map information.
